(19)

Europäisches
Patentamt
European
Patent Office
Office européen
des brevets

(11) **EP 2 158 769 B1**

(12) **EUROPEAN PATENT SPECIFICATION**

(45) Date of publication and mention
of the grant of the patent:
**30.07.2014 Bulletin 2014/31**

(51) Int Cl.:
***H04N 13/00*** *(2006.01)*     ***H04N 19/00*** *(2014.01)*

(21) Application number: **08755383.0**

(86) International application number:
**PCT/US2008/063517**

(22) Date of filing: **13.05.2008**

(87) International publication number:
**WO 2008/144306 (27.11.2008 Gazette 2008/48)**

(54) **METHOD AND APPARATUS FOR PROVIDING ADDITIONAL FUNCTIONALITY TO A DVD PLAYER**

VERFAHREN UND VORRICHTUNG ZUR BEREITSTELLUNG ZUSÄTZLICHER FUNKTIONEN FÜR EINEN DVD-PLAYER

PROCÉDÉ ET APPAREIL POUR FOURNIR UNE FONCTIONNALITÉ SUPPLÉMENTAIRE À UN LECTEUR DE DVD

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **15.05.2007 US 748695**
**19.10.2007 US 875207**
**06.11.2007 US 935445**

(43) Date of publication of application:
**03.03.2010 Bulletin 2010/09**

(73) Proprietor: **Warner Bros. Entertainment Inc.**
**Burbank, CA 91522 (US)**

(72) Inventors:
• **OSTROVER, Lewis, S.**
**Los Angeles, CA 90027 (US)**
• **COLLAR, Bradley, Thomas**
**Valencia, CA 91355 (US)**

• **COOKSON, Christopher, J.**
**Studio City, CA 91604 (US)**
• **CHIN, Lurinda**
**Northridge, CA 91343 (US)**

(74) Representative: **Eisenführ Speiser**
**Patentanwälte Rechtsanwälte PartGmbB**
**Postfach 31 02 60**
**80102 München (DE)**

(56) References cited:
**US-A- 3 436 473**     **US-A1- 2002 009 137**
**US-A1- 2002 009 137**     **US-A1- 2003 108 341**
**US-A1- 2004 240 860**     **US-A1- 2005 185 937**
**US-A1- 2005 259 147**     **US-A1- 2006 062 294**
**US-A1- 2006 133 493**     **US-A1- 2006 177 199**
**US-B1- 6 529 604**     **US-B1- 6 546 053**

## Description

## BACKGROUND OF THE INVENTION

### A. Field of Invention

This invention pertains to a player of optical discs, and more particularly to a player for optical discs or other similar devices providing content to an end user and having an external port used for controlling and extending the memory and functions of the player based on commands or other data from an external storage device coupled to said external port. For example, the external device may be used to store a URI that references data on an optical disc or network server, or conversely, the optical disc is used to store a URI that references data on the external storage device or network server. Alternatively, or in addition, a stereoscopic or 3D program is generated by a player and displayed using standard video content from a DVD combined with additional information. The player receives the additional information from a remote server through a network interface, from a different portion of the DVD, or from the external device.

### B. Description of the Prior Art

Early optical disc players, used for example to play compact discs (CDs), essentially duplicated the functionalities of magnetic tape or record players. Since these latter devices were analog devices, they were able to perform only limited--mostly linear-- functions beyond merely reproducing music or other sounds or video. The more recent optical disc players, including standard DVD players and the newer high capacity players, such as Blu-ray and HD DVD (high definition DVD) players, can play back both audio and video and can perform many additional control of content functions, especially if they are connected to a network. Presently, content is made available to users through a variety of media, such as read only memory (ROM) optical discs, having structures which do not allow the content to be changed or updated. This limitation precludes users from easily availing themselves of updated content for play back.

In addition, current disc players and other playback devices are generally software and firmware driven. The storage for such control is generally limited, which precludes complex manipulations such as those required for complex interactive games.

In addition, the software and firmware often require updating to correct erroneous functions, to improve the operation of the devices, or to make the devices compatible with new types of discs or disc formats. However, the usual mechanisms available until now for updating the software in disc playback devices have been labor intensive and have included returning the device itself to the retailer or service center to change the firmware within the device; obtaining a disc that includes updated firmware; or downloading the update through an Internet connection (if available). These mechanisms vary in easy of use and efficacy by user and form of update.

Moreover, present devices for playing discs are capable of presenting the content from the discs on a screen but generally cannot be used for rapid response to user stimuli, for example to play sophisticated games. Nor can most present devices present 3-D images unless the original content is encoded for this purpose.

Displays currently available commercially can present only two-dimensional (2-D) flat images and almost all content being distributed today to the general public, using for example, optical discs (e.g., standard DVDs, as well as Blu-ray DVDs and HD-DVDs) are configured for presentation on these 2-D displays. Technology has been developed for presenting 3-D or stereographic images, and it is believed that there will be an increasing demand for content in this format. However, since most displays presently available are 2-D displays, at least for the foreseeable future, content will have to be distributed in both formats.

One solution to this problem is to create two different DVDs for each video program (e.g., one DVD that is configured for standard players and 2-D displays and a different DVD configured for stereoscopic systems). In most instances, the 2-D content can be provided on a single layer of a disc. However, the stereoscopic version of the same content may require the full capacity of both physical layers of one side of a DVD, thereby increasing the cost of manufacturing the disc.

Another solution would be to provide both formats on the same disc, one format on each side. However, this solution may still not be ideal because this process is even more expensive per disc then the previous solution.

Furthermore, until a large number of stereoscopic DVD players are sold in the marketplace, the cost of creating a small number of stereoscopic DVDs or players may be too high.

Therefore, a system is needed that allows both a standard version of a video program and a stereoscopic version of the same program to be efficiently distributed while continuing to use a single DVD. It would further be desirable to avoid rendering obsolete the large number of existing standard DVDs and players in the possession of consumers. In addition, it would be desirable to provide a means of distributing stereoscopic video that is relatively resistant to piracy.

U.S. Patent No. 6,633,725 describes a method and apparatus wherein content is provided on two layers of a DVD. On one layer, the content is provided in a standard format and definition. The second layer is used for additional information over and above what is needed for a standard presentation of the content for enhancing the experience of watching the content in standard definition. For example, the information may include a second camera angle and scenes from this second camera angle can be used to replace scenes from a first camera angle.

Alternatively, the information on the second layer may be high definition information that is combined by a player with the content in the standard definition format to render it into content in a high definition format.

In U.S. Patent Publication 2004/0240860 an apparatus for reproducing video data signals is described with input means for receiving encoded video data signals and processing means for decoding the encoded video data signals. The encoded video data signals includes a base stream of signals representing a standard resolution portion of the video data signals and at least one enhancement stream of signals representing a high-resolution portion of the video data signals. The apparatus is capable of reproducing high-resolution video data by decoding and combining those streams.

However, the preceding documents do not address the issue of storing stereoscopic video on a DVD. Furthermore, they do not address the issue of providing stereoscopic video without the need for consumers to replace their existing standard DVDs or players. In addition, they do not address possible piracy issues.

US 2003/0108341 A1 discloses an optical disc having a three-dimensional (3D) picture and a high definition picture stored thereon, and an apparatus for recording data to or reproducing data from the optical disc.

## SUMMARY OF THE INVENTION

Because of the ever changing nature of content, there is a present need for means by which updated command or application information can be provided (1) to control how a disc player presents or renders the content from a disc and (2) for additional content from external sources.

The present invention overcomes the aforementioned limitations of play back of a ROM-device by affording users the ability to update or add content, applications, persistent memory, or storage, and to enhance pre-existing content or applications through the use of external data storage (such as a Universal Serial Bus or USB-connected thumb drive).

In addition, by providing a mechanism for firmware or other application updates or upgrades, users are saved the costs and bother of returning the device, obtaining and running a disc for updates, or downloading updates via an online connection.

Applications for adding content to a ROM-based disc are envisioned. For example, a disc provided for entertainment could include a movie, but several different endings, outtakes, trailers or commentaries may be generated and distributed separately to licensees after the original discs are made. Alternatively, additional content that would otherwise not fit on an optical disc can be provided by alternate means thereby eliminating the need for multiple discs.

In another example, discs are provided with some basic summary or introductory content related to entertainment or education. Subsequently other means may be used to provide additional, comprehensive or updated content to enhance what is on the original discs. In fact the additional material may not have even been conceived or developed at the time the original discs were published. As before, the additional material may include additional commands, user interface data, or other content, e.g. high-bandwidth content.

Such updates may, at least in part, be determined at the user's discretion. The user may also be able to search and download or stream future content based on areas of interest. For example, a disc may be instructive of a particular country, but the user may have additional interest regarding a particular city. The additional material may be available through various content distribution schemes, e.g., outright purchases, licenses, or subscription services, that may be limited in different ways, such as temporally, territorially, etc. The need to provide frequent updates and more current information for applications also frequently arises with education-oriented content, where, for example, topical materials might have a significant impact for helping a student in a particular subject, such as history. The need to provide updates and current information for applications also frequently arises for entertainment material, where, for example, topical content or applications materials might have a significant impact for additional entertainment value.

An aspect of the invention is to provide a stereoscopic video signal using standard DVD video data combined with enhancement data. In one embodiment, the enhancement data is provided via downloading and/or streaming to a stereoscopic DVD player, as set out in claims 1 and 4.

In an example, the enhancement data may be burned on the same DVD as the standard video. In other embodiments, the enhancement data is provided as a single file and as a data stream. Both types of data are combined with the standard video data to obtain the stereoscopic video signal.

In another example, a method of pre-processing a 3D source video is presented in a way that allows the enhancement data (e.g. alternate eye view) as a difference signal consisting of the (Right Eye View - Left Eye View) on a pixel-by-pixel basis. This difference signal is preprocessed by increasing the intensity values of each pixel, thereby decreasing the data rate necessary to encode. The preprocessed difference signal is encoded and multiplexed onto the disc along with the standard video program. The standard video program and enhancement data (consisting of the preprocessed difference signal) are decoded by two separate decoders. The player uses the decoders to receive the decoded enhancement data and perform the inverse of the difference signal preprocessing step. For example, the player can use a lookup table to perform the inverse of the difference signal preprocessing step.

The enhancement data is scaled down from high definition resolution to a standard definition resolution prior to encoding. The player scales the decoded enhancement data up to high definition resolution prior to performing inverse of the difference signal preprocessing step.

In another example, a method of preprocessing the enhancement data (alternate eye view) is presented in which the enhancement data is noise reduced prior to encoding. The noise reduction consists of removing the film grain from the enhancement data. The film grain is stored as metadata in the encoded enhancement data. The player reinserts the film graininess during decoding of the enhancement data.

In another example, a method of upgrading the firmware of a H normal high definition disc player (HD DVD and/or Blu-ray) to make it a 3D capable player is presented. The method uses a normal player with two video decoders. The player is firmware operated, and the firmware is upgraded to add logic to the player's navigation manager to act upon the presence of a 3D flag. More specifically, when the 3D flag is present, the player looks for enhancement data on the disk and then combines the same with the standard information on the disc to provide a 3D rendering. For this purpose, the player includes a video renderer module to perform the processing required to generate a 3D output. The video renderer includes logic to scale the standard definition and perform the inverse of the difference signal preprocessing step. A firmware upgrade is used to add logic to the player's video rendering module to scale the standard definition resolution video up to high definition resolution prior to performing the inverse of the difference signal preprocessing step.

In this manner, a single optical disc is produced that includes both a 2D and 3D version of the disc. The disc can play as 2D in all conventional high definition players (HD DVD or Blu-ray) without the need for a firmware update.

As discussed, preferably, the disc includes a 3D flag indicating it contains enhancement data for 3D playback.

To summarize, an optical player is presented that has a standard digital port for coupling to an external device that provides data to the player. The data may include content that augments or is combined with content from an optical disc, and/or control data, including data updating the software or firmware of the player. The external device may be a data storage device, such as a thumb drive, containing codes to enable the player to perform or enhance various functions, content that may be mixed with content from a disc for presentation to the user, new content or some combination. Data from the external storage can be accessed directly, or can be downloaded into the limited (low capacity) internal data storage means of the player. Once data are downloaded into the player's persistent or internal storage, they may be used for their intended purpose even after the external storage is removed and/or the optical disc is removed, e.g., a different disc is inserted. Alternatively, or in addition, the external device may be a gateway through which data is fed to the optical player. The content from the external storage device may be used to generate 3-D or stereoscopic images or video signals.

## BRIEF DESCRIPTION OF THE DRAWINGS

FIG. 1 is a block diagram of a DVD player for combining video data from a standard DVD and enhancement data from a file to generate a stereoscopic video signal;

FIG. 2 is a block diagram of a DVD player for combining standard video data and enhancement data to generate a stereoscopic video signal;

FIG. 3 is a block diagram of a DVD player for combining video data from a standard DVD and enhancement data from a stream to generate a stereoscopic video signal;

FIG. 4 is a block diagram of a DVD player for combining video data from a standard DVD and enhancement data from both a file and a stream to generate a stereoscopic video signal;

Fig. 5 shows a block diagram of a high definition DVD player for combining data from a DVD with enhanced data from the disc, an external data storage device or a network server to generate stereoscopic video signals;

Figs. 6A and 6B show a look-up table to be used by a high definition DVD player, such as the one shown in Fig. 5, reversing the preprocessing step and subsequent derivation of the alternate eye view;

Fig. 7 shows a block diagram of an optical disc player with an external port in accordance with this invention;

Fig.8 shows a block diagram of a system of two or more interconnected optical disc players and/or other devices.

## DETAILED DESCRIPTION OF THE INVENTION

The present invention takes advantage of the concept that a stereoscopic video signal can be generated by combining a standard video signal (SD) with additional information in the form of enhanced data (ENH) required for the stereoscopic video signal (SSVS). One possible technique for implementing this approach is to interleave the data at the level of video object units (VOBUs) as known from the DVD standard. Multi (camera) angle pointers or multi-path pointers may be used for this purpose. For example the SD data may be comprised of a default camera angle track and additional or ENH data for an alternate camera angle track.

Every DVD player has a so-called track-buffer of X Mbits. The encoding and multiplexing of the SSVS stream must be done in such a way that at every separation point (i.e., a point in time separating SD sectors and SSVS sectors) there are enough bits in the track-buffer to bridge the gap in time it takes to jump over a block of enhancement sectors. Suppose it takes $T.sub.0$ seconds for a jump before new SD sectors are read again and data is supplied to the decoder at an average bit rate of $BR.sub.av$. This means that at least $T.sub.0 * BR.sub.av$ bits must be present in the buffer as the jump starts..

The peak rate at which a DVD player can read data can be designated as $BR.sub.pk$. Reading of data should be performed at a rate as close as possible to $BR.sub.pk$. During the decoder must be supplied with the needed SD bits. Therefore the content of the track-buffer increases at a rate $BR.sub.pk - BRsub.av$. Generally, the number of bits collected in the buffer while the SD sectors are read is , $T1 * (BR.sub.pk - BR.sub.av1)$ and this number must be equal to or exceed the number of bits, needed during the jump phase (, $T.sub.0 * BR.sub.av$). This puts an additional constraint on the SD encoder.

The DVD disc will also contain a 3D flag (3DF) located in the navigation data of the disc which indicates that the disc contains two camera angles, each containing one eye-view of the SSVS. When this flag is set, normal DVD players will not recognize the flag and only decode the first camera angle. In addition, the disc can be authored to mask the angle-change user operation control, thus preventing the user from accessing the second angle manually via the remote control. A 3D-enabled DVD player must recognize the flag and subsequently combine the two video angles into the SSVS signal.

In another embodiment the control circuit of a 3-D DVD player reads a block of SD data (e.g., for 1 second of video) data very fast and stores it in a memory, then jump to the enhancement data area and reads a block of ENH data very quickly (again, for 1 second of video) stores the data in memory. In this way the control unit of the player keeps reading the SD and ENH sectors in an alternating sequence. The base decoder and the enhancement decoder read the respective data from this memory. The control unit has or is associated with input buffers and the memory are made sufficiently fast and large so that SD and ENH decoders never run out of data and thus are able to deliver an uninterrupted continuous video data signal. In this embodiment, for the interval of 1 second about 2 MB of memory is required. Furthermore, the control unit can be adapted to recognize signaling bits which do not affect regular DVD players, but can be used to direct the apparatus to reproduce the combined stereoscopic video data.

Yet another embodiment stores the base data representing a standard resolution portion of the video data signals and enhancement data representing the alternate eye-view portion of the video data signals on different physical layers on the DVD. In this case the control unit is adapted to receive encoded video data signal from this multi-layer optical disc. In addition to the above, there are other ways to separate SD and ENH data in a backward compatible way at the MPEG stream level, such as the MPEG-2 Program Stream level; or the MPEG-2 (or MPEG-1) elementary stream level.

At the MPEG-2 Program Stream level, the enhancement data is preferably provided as a a private data stream, or is multiplexed with other data to form a private data stream.. Alternatively, the enhancement data can be included directly into the MPEG-2 video elementary stream containing various other segments such as extension and user data segments, a sequence, a group of pictures or at the picture level. A drawback of including the enhancement data directly into the MPEG stream is that the DVD standard requirement restricts the maximum data rate to 10.08 Mbps. Although the target average for the total data stream is about 8 Mbps (allowing for recording 135 minutes on a dual-layer DVD disc), peak rates can be well above the target average. Legacy players may be unable to function normally if this maximum bit rate is exceeded. Therefore, the allocation rule for the ENH data must be adjusted in such a way that the excess data near the peak rates are more evenly spread over a wider area in the stream. This can be accomplished by defining the size of the separate buffer, which is required for the ENH data stream in the MPEG-2 system target decoder model, to be big enough to handle the vast majority of streams. In exceptional cases peak bit rate problems can be solved by proper preprocessing (filtering) and/or by adjusting the compression rate locally. After readout by the control unit the prefetched ENH data is kept in an ENH data memory until it is needed by the enhancement decoder. Even when the average prefetch time offset is by as much as 1 minute, the corresponding memory size is still not excessive (in the order of 60 seconds * 2 Mbps <16 MB). In a particular embodiment a faster than 1x drive and optional SD data memory may be used.

Separating the SD and the enhancement data streams at the MPEG level has a number of advantages. For example, authoring is relatively simple as the two streams are combined immediately after coding. Other stages of the authoring process are hardly affected. Another advantage is that the jump noise in the apparatus is kept low (compared with other embodiments in which the streams are at a greater physical distance). Moreover, the MPEG stream including the ENH data can be redistributed without additional processing, using existing standards.

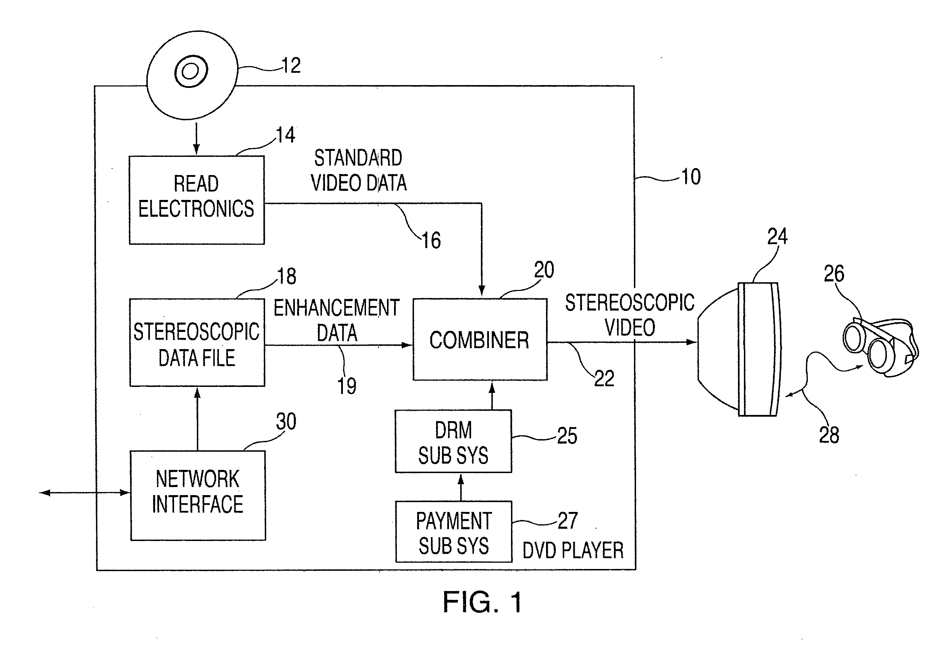

In a first embodiment, a system and method is provided in which a stereoscopic program is displayed using content obtained from a standard DVD and a separate file containing enhancement data. The system further includes a player with means for decoding the enhancement data and the video data from the DVD, and combining them to generate stereoscopic video data. More specifically, as illustrated in Fig. 1, a system 10 receives a first DVD 12 that contains standard content. Data from DVD 12 is obtained by a read electronics member 14 which includes a read head (not shown). Member 14 decodes the data from the DVD and generates a standard video data SD signal 16.

The system 10 also receives a stereoscopic data file 18 that includes enhancement or ENH data 19 necessary to convert the standard video data 16 into a stereoscopic video signal SSVS. This stereoscopic video signal may comprise alternate video lines or fields intended for the viewer's left and right eyes, respectively, e.g., one displayed line may contain left eye video and the next line may contain right eye video, or may use some other scheme of providing stereoscopic video images. The enhancement data 19 is combined by a combiner 20 with the standard video data to generate the stereoscopic video signal 22. This signal 22 is fed to a display device 24 for presentation to one or more viewers. The viewers may need some special equipment, such as stereoscopic eyewear 26 to see the presentation properly. The eyewear 26 may be coupled by a controller (not shown) and a control link 28 that may control shutters in the eyewear (not shown) such that when the left eye video is displayed a left eye shutter in the eyewear is open and a right eye shutter is closed, and vice versa when the right eye video is displayed. The shutter control link may comprise an infrared radiation (IR) link or a radio-frequency link, or any other suitable communication medium, although, preferably, a wireless medium.

In the embodiment shown in FIG. 1, the stereoscopic data file 18 is downloaded via a network interface 30 from a remote network (not shown). The file 18 may be stored in any type of internal memory such as a magnetooptical hard drive, a RAM, or an external or removable memory such as a thumb drive.

Alternatively, the contents of this file may be downloaded from a second DVD with the enhancement data. The second DVD may be a read-only type, or, alternatively, a read-write (RW) type. If the second DVD is a RW type, the enhancement data may be downloaded via the network interface and written to the RW DVD. In this variation of the invention, the network interface 30 and stereoscopic file 18 are replaced by a second DVD and a corresponding read electronics member (not shown). The enhancement data from the second DVD is combined by combiner 20 with the standard video signal as described above.

A Digital Rights Management (DRM) subsystem 25 may be incorporated into the player 10 to insure that the player 10 is authorized to decode the SD video signal. The DRM system may also limit the number of times that the file may be decoded for each payment. A payment/authorization subsystem 27 may also be included in the player to allow additional plays of the content in exchange for additional payments to the content provider.

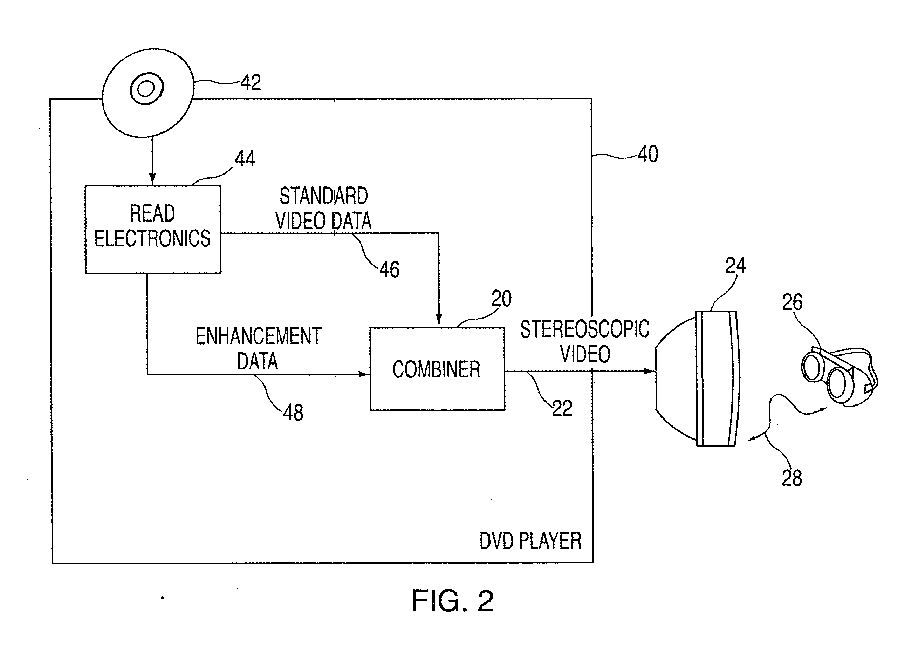

In a second embodiment, shown in FIG. 2, a single DVD 42 includes both a standard video program data and enhancement data. The player 40 includes a read electronics member 44 that reads from the DVD 42 both the standard video data 46 and the enhancement data 48 to generate stereoscopic video data. The two are combined in combiner 20 which then generates a stereoscopic or 3D image as discussed above. It should be understood that in FIG. 2 for the purpose of logical clarity, the two data streams 46, 48 are shown separately, but in many physical implementations a single data stream 22 containing both standard video data and enhancement data is recovered by the read electronics member 44, and the standard data and enhancement data portions are first extracted or de-multiplexed from the single stream by the read electronics member 44 before being separately decoded and combined to form the stereoscopic video, as necessary.

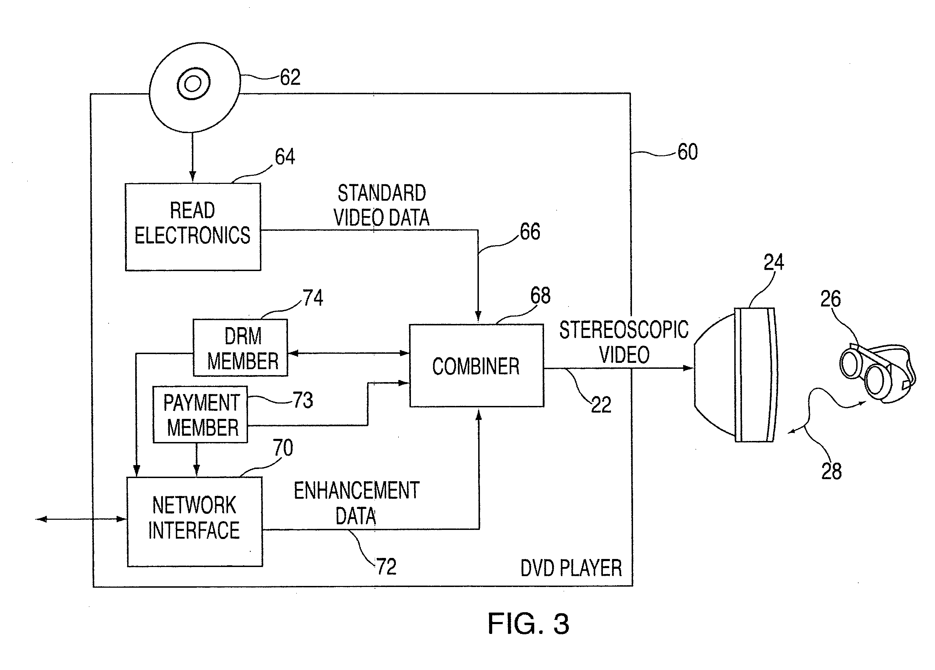

In a third embodiment, a system and method are provided in which the enhancement data is received in a stream rather then as a single data file stored in a memory. As shown in FIG. 3, in this system 60, a DVD 62 is read by a read electronics member 64. Member 64 then generates the standard video data stream 66 to combiner 68. Enhancement data with the information required for stereoscopic presentation is received from a remote server (either via an Inter- or Intra-net, not shown) through a network interface 70. The stream of enhancement data 72 is required to generate the stereoscopic video signal 22 and is supplied to the combiner 68.

The source of the enhancement data stream may be a data server operated by the provider of the DVD content, or any other party authorized by the content provider. A payment beyond the original cost of the DVD may be required to authorize the player to decode the stream using e.g. a payment subsystem 73..

A Digital Rights Management (DRM) member 74 may also be included with the player. The member 74 controls the generation of stream of enhancement data 72 to insure that the stream may be decoded only by authorized players. The DRM member 74 may also limit the number of times that the stream may be decoded for each payment. Alternatively, either or both the DRM member and the subsystem 73 may control the operation of combiner 68 and may disable said combiner 68 under certain conditions, including DRM failure or failure to pay for additional copies of the stereoscopic content. The network interface 70 has sufficient bandwidth to support the relatively high data rate needed to supply the enhancement data 72 to the combiner 68 such that real time generation of stereoscopic video signal 22 may be sustained.

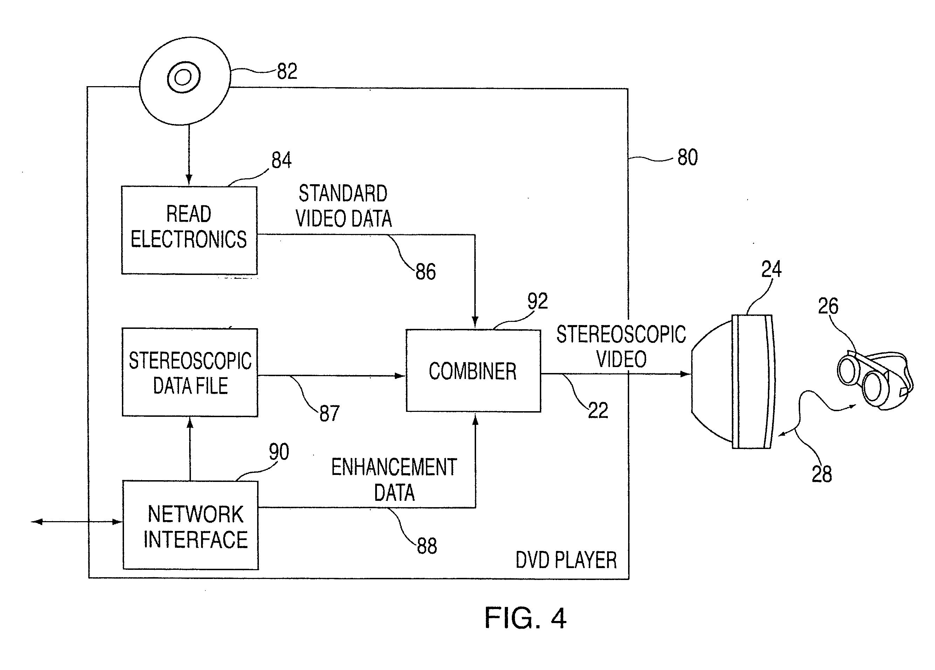

In a fourth embodiment, a player receives the enhancement data in both a file and a stream. FIG. 4 illustrates a player 80 receiving a first DVD 82 that contains only standard video data. The read electronics member 84 generates from the DVD 82 the standard video data stream 86. The enhancement data required to generate stereoscopic video is supplied by both a file 87 and separate stream 88 from a remote network via a network interface 90. The file 87 is stored in an appropriate memory and is provided together with the enhancement data stream 88 in combiner 92. The enhancement data 87, 88 is decoded and combined with the decoded standard video data 86 by the combiner 92 to form the stereoscopic video 22.

Any alternatives discussed in relation to the previous embodiments are equally applicable to this fourth embodiment. For example, the source of the file may alternatively be a second DVD and the source of the stream may be a third party (neither the consumer nor the content owner).

Added security against piracy may be provided in this embodiment by, for example, only authorizing the stream for the duration of a single playing of the content, so that no permanent copy of at least part of the enhancement data is ever available at the player. At the same time, part of the additional content can be provided by the file, easing bit rate requirements on the network interface.

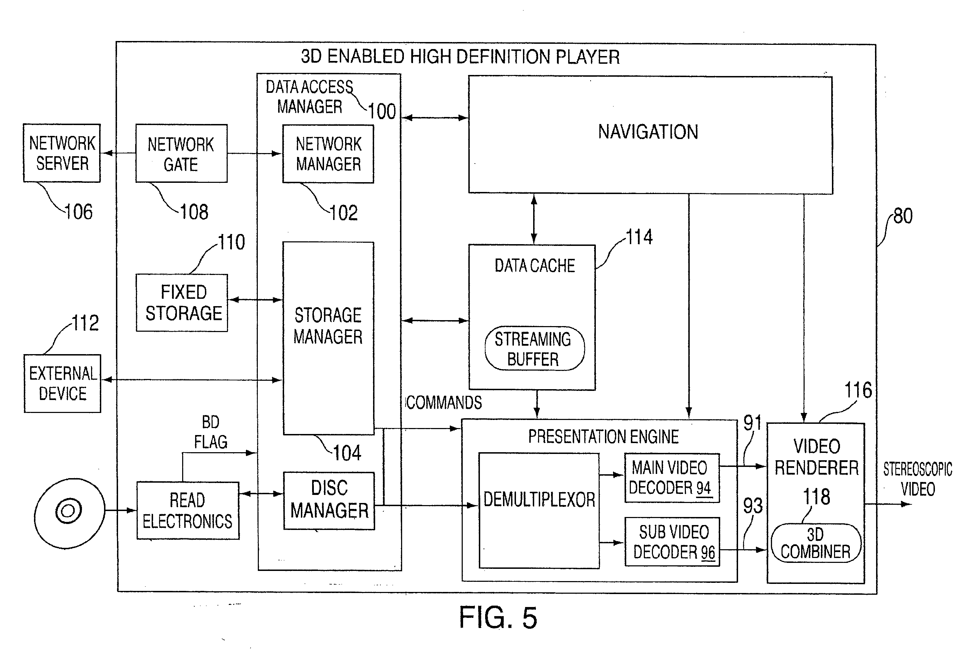

In a fifth embodiment, shown in FIG. 5, a single high definition disc (HD DVD or Blu-ray) includes a standard video program data, enhancement data representing the alternate eye view, and a 3D flag set to indicate its 3D capabilities. The player 80 includes a Disc Manager that directs a read electronics member that reads from the disc a single data stream containing both the standard video data and the enhancement data to generate stereoscopic video data.

The player further includes a data manager 100 with a network manager 102, a data storage manager 104, and a disc manager. The data access manager also exchanges information and data with an external network server 106 through a network gate 108. Various control data including applications associated with various functions of the player are stored in a main or fixed data storage element 110. Additional information and/or control commands can be received from a removal or external data storage device 112.

The data stream from the disc is passed to the Presentation Engine of the player 80 and as directed by the Navigation manager. As described in the parent application described above, normally, the presentation engine processes the data from the disc under the control of commands from the data access manager and the navigation manager. As part of this processing, the data stream is demultiplexed and the video data is fed to the Main Video decoder 94 and presented to the video renderer 116 as a stream of standard video data 91. Other information, including a private video stream, and the like is decoded by a Sub-Video decoder 96 and presented to the video renderer 116. Data cache 114 is used to store data temporarily as needed.

Importantly, the read electronics member detects the 3D flag (when present) from the disc and sends it to the data access manager and subsequently to the navigation manager to indicate that the disc contains enhancement data. In response the navigation manager modifies the operation of player 80 so that the player can generated SSVS signals. More particularly, the presentation engine demultiplexes the stream from disc manager 82 into two separate video streams: which are then fed to the decoders 94 and 96 respectively. The decoded signals are the main video stream 91 containing the standard video program (e.g. the left eye view of the program) and a sub-video stream 93 containing the additional video data (e.g. the right eye view) and are passed to the Video Renderer module 116. The Video Renderer module contains a 3D Combiner module 118 which combines the two video streams and generates a corresponding SSVS signal as an output.

It is important to note that the only difference between a normal high definition player (HD DVD or Blu-ray) and the 3D enabled high definition player 90 shown in FIG. 5 is the addition of the 3D Combiner module 118. When a normal high definition player receives a 3D enabled disc that has the 3D flag set, its Navigation Manager ignores the 3D flag altogether and therefore only the main video will be rendered to the screen by the Video Renderer. Therefore the content from the disc is presented as a standard video signal. The player can be changed to operate as described for generating SSVS signals by upgrading the firmware of the player thereby affecting the operation of the data access manager, the presentation engine and the video rendering module as discussed above. Similarly a DVD player implemented in a PC may be upgraded by providing a new video card.

Alternatively, as shown in FIG. 5, enhancement data representing the alternate eye view can be streamed from a Network Server 106 to the player's streaming buffer (data cache 114) and subsequently to the Sub-Video decoder 96.

Alternatively the enhancement data can be downloaded from Network Server 106 and stored into the player's Fixed Storage 110 and subsequently played back in conjunction with the standard video content located on the disc.

Alternatively the enhancement data can be played back from external device (e.g USB hard drive) 112 as discussed above with respect to enhancement data from the network server 106.

Alternatively the enhancement data can consist of a difference signal D. The difference signal consists of the difference between the standard video signal (e.g. the left eye view) and the alternate eye view (e.g. the right eye view) for each component of each pixel of the video image, that is for each component of each pixel $D_{xy} = L_{xy} - R_{xy}$ where x and y represent the x and y coordinates of a specific pixel in the video frame.

During the video preparation process the difference signal can be further preprocessed such that it can be encoded at a very low data rate to make it more practical to fit the entire 3D movie on a disc. One method of preprocessing the difference signal is to increase the intensity values of each component of each pixel of the video image by adding an offset value to the original value. Since HD DVD and Blu-ray video signals have 8 bits (256 values) per component, the difference signal should be converted to 7 bits (128 values) per component in order to avoid clipping of the values above 255 and below 0 during the preprocessing step. Therefore, each component of each pixel of the preprocessed difference signal will be represented by $D'_{xy} = \left(\dfrac{D_{xy}}{2}\right) + 128$, rounding down to the nearest whole integer.

Subsequently the enhancement data (consisting of the preprocessed difference signal) will be decoded by Sub-Video decoder 96 and passed to the Video Renderer 116. In addition, the standard video program is decoded by Main Video decoder 94 and passed to the Video Renderer 116. The Video Renderer 116 then performs the inverse of the preprocessing step previously described to derive the alternate eye view (e.g. right eye view). Specifically, each component of each pixel of the alternate eye view (e.g. right eye view) is represented by $R_{xy} = L_{xy} - 2(D'_{xy}-128)$. The resulting sub-video stream 93 containing the additional video data (e.g. the right eye view) is then passed to the 3D Combiner 118 along with the main video stream 91 containing the standard video program (e.g. left eye view of the program) which generates the corresponding SSVS signal as an output.

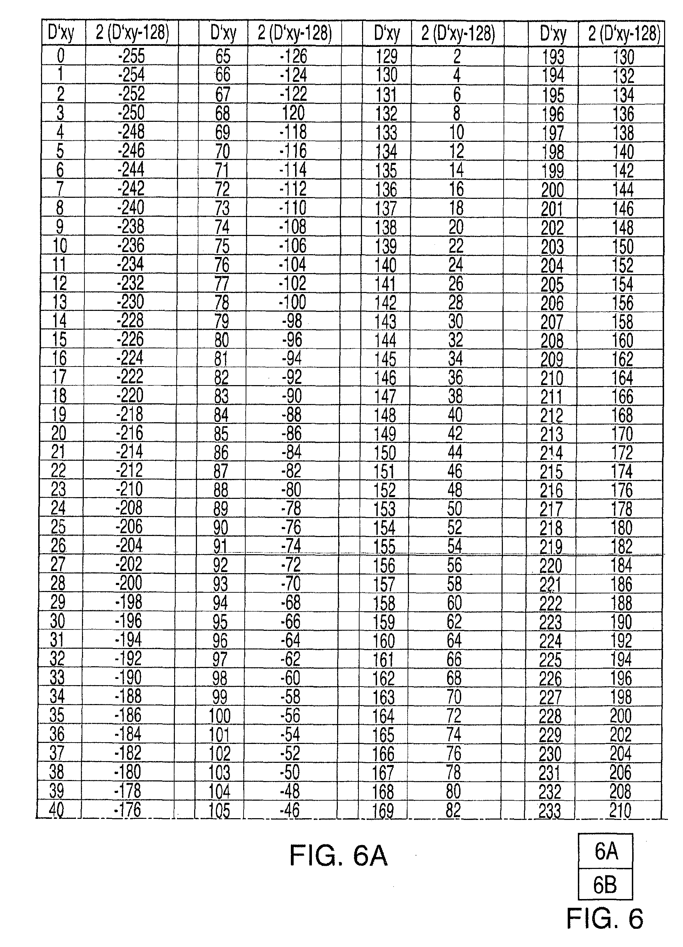

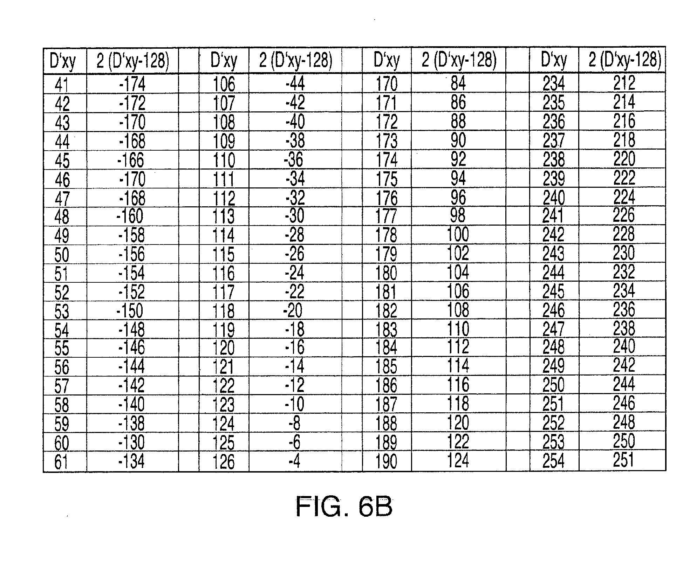

Since the preprocessed difference signal D' will contain a finite range of values (from 0 to 255) and in order to minimize the mathematical computations of the player, a lookup table as shown in FIG. 6 can be used to quickly perform the calculation of $- 2(D'_{xy} -128)$. Therefore the player will only have to perform a single subtraction calculation to derive the right eye view ($R_{xy}$).

In addition, if the source material is high definition resolution, the preprocessed difference signal D' can be scaled down to standard definition resolution prior to video encoding to further reduce data rate needs. In such a case the Video Renderer 116 would scale the preprocessed difference signal $D'$ back up to high definition resolution prior to performing the inverse of the preprocessing step (as previously described above).

Alternatively the enhancement data representing the alternative eye view can be noise reduced prior to video encoding to further reduce the data rate needs. In particular, the alternate eye view source material can be filtered to remove the film grain. The removed film grain is represented as metadata and stored within the encoded video signal. When the enhancement data is decoded by Sub-Video decoder 96 the film grain is added back into the decoded sub-video stream 93 and is subsequently passed to the Video Renderer 116.

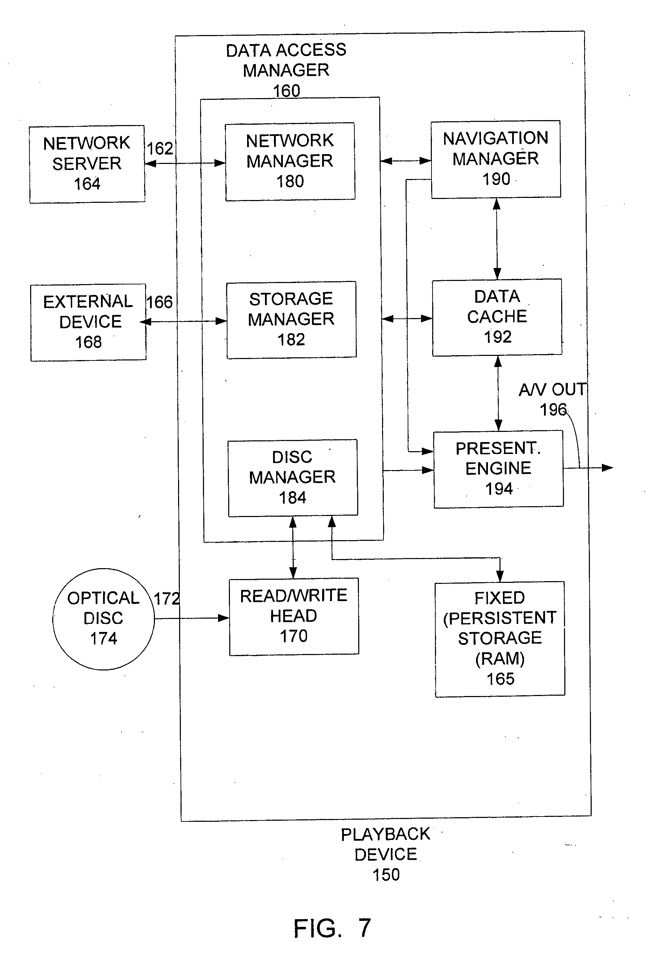

Fig. 7 shows an optical disc player or other similar device 150 constructed in accordance with this invention similar to the one in Fig. 5 however without the capability of playing or rendering stereoscopic video signals. Apparatus 150 includes a data access manager 160, a fixed storage component 165, a read/write head 170, a navigation manager 190, a cache 192 and a presentation engine 194.

The data access manager 160 controls data communication with the outside world and is connected to a port 162 coupled to a network server 164. The port 162 could be an Ethernet port, a wireless port, a connection to a telephone or cable modem, etc. Through the network server 164, the data access manager 160 can access information from a public or private network (not shown). In one embodiment, the data access manager 160 relies on a Uniform Resource Identifier (URI) to communicate with the outside world. This feature is advantageous because it allows the data access manager and/or other hardware and firmware of the optical disc player to reference content and/or application software without specifying the physical location or byte address thereof. The URI allows the data access manager to call for the content and/or application software from either a remote location via port 162 and the network server 164, from the local fixed storage 165, from the data cache 192, or from a local external data storage device 168 accessed through port 166 as discussed more fully below. A URI can be incorporated in the program controlling the manager or can be located in the external storage device 168. The URI may contain the logical file path or address to the additional content and/or application software. The system and method by which the data access manager 160 references content and/or application software independent of the physical location or byte address thereof is called a Virtual File System (VFS)..

The standard fixed data storage 165 can be a standard persistent data storage component such as a solid state random access memory (RAM) including a hard drive. Storage 165 is used to store software and content data for the operation of the player 150. The data in storage 165 can be deleted or altered by the user or by software components from the optical disc 174.

Presently, the size or storage capability of data storage 165 is rather limited. Typically this storage has a capacity range of 128 Mb to 1 Gb which is not enough to provide sufficient persistent data or to contain commands or applications for many extended functions for the player 150.

The player 150 further includes a port 166 used for establishing communication with the external device 168. In the preferred embodiment of the invention, the device 168 is an external data storage device. For example, the device 168 may be a thumb drive with a male USB connector, in which case the port 166 is a female USB connector. Presently several manufacturers make thumb drives having up to 4 Gb of memory or more. Other types of removable devices may be used as well.

The read/write head 170 is associated with a tray or other similar means 172 for accepting an optical disc 174. The optical disc 174 is used to store information including both content and data associated with the content. The means 172 presents the disc 174 to the head 170 which then reads the information from the disc 174 and presents it as data and/or commands to the data access manager. Optionally, data may also be written or burned onto disc 174 by head 170 if the player 150 is a read/write device.

The data access manager 160 (and indeed most of the other components of the device 150) can be microprocessor controlled however it is shown here with discrete components for the sake of clarity. The manager 160 thus includes a network manager 180 that controls information exchanged with the network server 169 through port 162, a storage manager 182 that controls the information exchange with fixed storage 165 and the external device 168 and a disc manager 184 that controls the data flow from the optical disc 174.

Using URI-type of addressing to call for content or software applications provides the DVD player with various novel modes of operation described in more detail below. Alternatively, in a go/no-go alternative the URI could point to a location with content and/or application software that controls whether the player can read the disc or not. For example, the URI could call for content/application software from the external data storage device 168 and if the device 168 is absent, or the wrong device is used, the player would not read the optical disc 174. Alternatively, the URI located on the optical disc 174 could point to an external device 168 that, if present, contains additional content and/or application software that has not yet been conceived or developed at the time the optical disc 174 was created. Subsequently, when the data access manager 160 attempts to retrieve the additional content and/or application software via the URI, and if the additional content and/or application software is not present on the external device 168, 0r if the external device 168 is not attached to the playback device 150, the optical disc 174 continues to play in a normal fashion. If the additional content and/or application software is present the playback experience is augmented as designed by the content creator, e.g. a new audio commentary stream is available for the user to listen to. This method allows for the continual updating of new content, functions, and features for the lifetime of the optical disc 174.

The navigation manager 190 controls and manages the flow of information between the various components of player 150, in accordance with commands from the program in storage 165, disc 179, or external device 168. The manager 190 also resolves conflicts between the various components, including conflicts with commands from the disc 174 and external device 168. The player 150 can be programmed so that commands from fixed storage 165 can override and, if applicable, replace commands in the disc 174. In one scenario, a disc is shipped by a content provider or distributor with one set of instructions. The fixed storage 165 is provided at a different time with a different set of commands from the external device 168 or the network server 164 which then supersede the commands on the disc 174.

The data cache 192 is a fixed, non-removable component that can be used to store data from storage 165, disc 174, or network server 164 for the use by the presentation engine 194 or the navigation manager 190. The data cache 192 may also be used as a data buffer.

The presentation engine 194 decodes and processes the graphics, text, fonts, audio, and video signals from disc 174 and data cache 192, potentially modified by instruction from navigation manager 190, and uses these decoded signals to generate corresponding output signals on output port 196. The port 196 may include several types of audio/video output devices using different plugs and protocols, such as HDMI, DVI, component, S-video, composite, RF, S/PDIF, etc.

In one embodiment, the external device 168 allows the player 150 to perform various functions that are either not available without the device 168, or that take less time and make better or more efficient use of the available resources. Data from external device 168 can be used to change, update, or otherwise augment the functionality of player 150 in several ways, including the operation of the player 150 itself, the data exchange with network server 164, the content downloaded from the disc 174, and/or data presented by engine 194.

In particular, the external device 168 may be used as a means for controlling the playing of content. If the player is a recorder as well, data from the external device 168 may be used to control the recording.

In another embodiment of the invention, the player 150 may be modified so that at least some of the discs inserted into the player can be played only if the proper external device 168 is inserted in port 166. That is, when a disc 174 is inserted, the disc manager 184 retrieves data from the external storage device 168. The disc 174 is played only if the correct authorization code or playback license transaction support is included on the external device 168. For this situation, the device 168 is sold to the end user at the same time as the disc, or is sold separately. The data in the external storage is preferably encrypted and digitally signed so that it cannot be easily duplicated and run without authorization, and is then decrypted and authorized by the disc manager 184.

As discussed above, a problem with existing DVD players is that their software or firmware is not easy to update without laborious effort. In another embodiment of the present invention, the external device 168 contains updating data. The device 168 is coupled to the device 150, the device 150 checks the content of the external device 168 (either automatically or in response to a user input) and if upgrade data is found, this data is used to upgrade the software or firmware of device 150.

In an alternate embodiment, the player 150 is a recorder/player that has the ability to burn a new disc and copy the content from an old disc or from other sources, including the external device 168 itself. In this situation, the external device 168 has DRM-type information. This information is used to control the copying of the old disc. For example, when an end user requests that content be copied on a new disc, the disc manager 184 checks if such a copying is allowed by data in external device 168. If copying is not expressly allowed, or if a proper external device 168 is missing, then the copy function is disabled.

Another use of the external device 168 is to complement the operation of the fixed storage 165 and/or the cache 192. A typical player 150 is constructed and arranged to present to a viewer a standard linear program from a disc, i.e., a DVD, in which scenes are played in a predetermined order and sequence. Of course, the user can stop the sequence of scenes, "rewind" to a previous location or scene in the program, skip "forward," and generally perform the normal functions associated with viewing such linear programs. It should be noted that HD DVD and (Blu-ray) discs support scene bookmarks and some very limited non-linear presentation of content. However, some programs are or may become available for discs that are not to be played linearly but require more complex data manipulation which cannot be performed efficiently (if at all) by the standard player. For example, complex interactive games normally receive complicated commands from users and, in response, require complex data manipulations for presenting the game's audio and visual components. In this situation the external device 168 is used to provide increased data storage to facilitate the playing of interactive games. The external device 168 may also be used to provide software elements for the game that are not included on the disc either because of space limitations, or because the software elements have not been made available until after the release of the disc.

In another embodiment, a disc is released with some basic audiovisual elements and the external device 168 is released separately. For example, the disc may contain a geography lesson with some economic information missing. The missing information may include the latest demographics on the population, industrial production, economic data, political data, etc. The missing information is then released at a later date, or at regular intervals by the external device 168. The player 150 then plays the program from the disc and fills in the missing information from the external device 168.

In the embodiments described above, the external device 168 is used to enhance the functionality of the play back of the player 150 itself. In other embodiments described below, information in the external device 168 is used by the presentation engine 194 in generating what or how content is presented. In one embodiment, a portion of the content from the optical disc 174 is replaced by new content from device 168. For example, the disc 174 may include content including the video component of a program and an audio component including dialog and subtitles in English and Spanish but not French. The device 168 may include dialog and subtitles in French. The presentation engine 194 then uses the information from the device 168 to generate a program with French dialog and subtitles properly interspersed with the unchanged video portion of the system.

In another example, the content includes a program with several sequential scenes. The external storage includes new content with at least one new scene and commands or instructions identifying where in the program the new scene is to be played, and whether the new scene follows or replaces one or more scenes from the original content from disc 174.

In yet another example, the disc includes content with a simple stereo audio channel. The device 168 contains a secondary audio channel for enhancements to the disc's audio channel together with switching or mixing applications. The secondary audio material can be used to replace or mix with the original audio channel, or to complement the same.

In yet another example directed at the educational field, the content on disc 174 includes a test with several questions. The device 168 includes answers to the questions. The engine can then show each question followed by the respective answer, all the answers can be presented after the questions, or the sequence of questions can be adjusted based on the student's answers, thereby re-testing similar topics or increasing the degree of difficulty of the questions.

Similarly, the disc includes content with a program having a video component for displaying images on a standard two-dimensional display. The external device 168 can include content with information and application software that is combined with the disc's video component by the player's presentation engine to generate three-dimensional or holographic images. The end user can then be given the choice of watching a program as a flat image or as a three-dimensional image.

Other embodiments of the invention pertain to the functions of the player 150 associated with the network server 164. In a simple embodiment, the port 162 is normally disabled and the player 150 cannot communicate with network server 164. Insertion of device 168 into port 166 enables the port 162 thereby allowing communication with the server 164.

In another embodiment, the device 168 contains a web address for information to be obtained by the player 150. In this case, once the device 168 is inserted, the player 150 obtains from device 168 the address and then contacts the respective website to download or upload information.

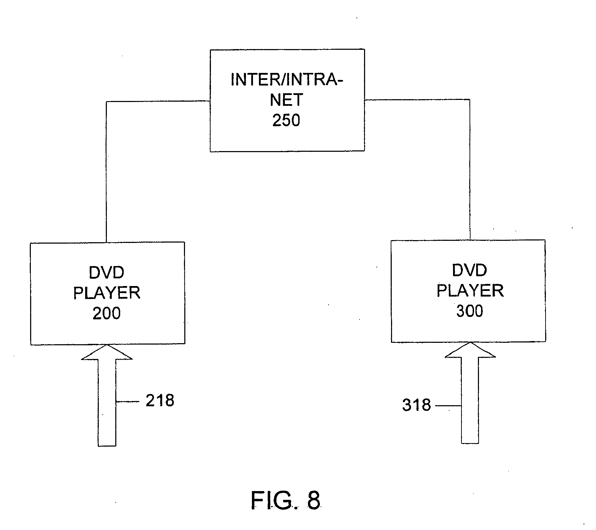

In yet another embodiment, shown in Fig. 8, two devices 200, 300 similar to player 150 shown in Fig. 7, are used interactively by two players to play a game. The two devices are interconnected via an inter- or intra-net 250 and each has an external storage devices 218, 318 respectively. The two external devices contain various information necessary for the two players to play, including, e.g., IDs, website information, etc.

In another embodiment of the invention, the external device 218 may provide other functions as well. For example, the device 218 may include a geographic locator such as a Global Positioning System, that receives signals from external sources (e.g., satellites, cell towers, etc.) and uses these signals to identify its location, and therefore the location of device 200. The combination of a geographic locator and a disc player can be used for various types of presentations. For example, the player 200 can be a portable player that is being carried around by a mobile user. The player 200 could provide an interactive presentation related to specific geographic features, attractions, etc., found at or near the current geographic location of player 200.

In another embodiment, device 218 includes an Internet gateway that provides the player with current content mixed with content from the disc for presentation to the user. For example, the player 200 may be used for playing a game requiring realistic or even live content, such as a simulated car race. As the player 'drives' a vehicle, live scenery may be downloaded through device 218 and presented as the scenery. Alternatively, or in addition, real-time geographic information, such as current maps or satellite pictures are downloaded to the player 200 which then blends them with the virtual imagery of the game. This embodiment is particularly useful for players that either do not have a separate access to the network server 250, or require specific connection to the server (e.g. , a wired connection) that may not be available or convenient. In another embodiment, if the external storage is removed, the respective functionality of the player is disabled. In yet another embodiment, a different external storage is required for each different optical disc.

In a further embodiment, the code on a DVD (need not be an HD DVD or Blu-ray, but could be) and the code on another DVD are used so that when the discs are played in connected players (e.g., connected PCs with DVD playback functionality) some features or functions are enabled by the discs' code such that these features or functions are not supported absent either of the discs. Similarly, in a single PC player environment or non-connected environment, the code on one disc could be copied into the PC's persistent storage (i.e. Hard disc) and when this disc is ejected and the next disc is played, features or functions that rely on the first disc's code are enabled. Conversely, features or functions that would have been prohibited in playing back the second disc are enabled once the first disc's code is loaded. This has some particularly interesting implications for use of combination DVD/HD-DVD discs (or other combination discs) such that absent both sides/layers, the necessary code to enable some features or functions will not be available, so pirate versions of just the HD DVD portion, e.g. will not have the necessary code.

Thus, the functionality of the player is modified by (a) using a removable storage device to supplement a disc player's persistent storage; (b) by using a removable storage device inserted into a disc player to introduce code without which some player functions can not work; (c) with the code in the data storage, some player functions are enabled (and are disabled when the storage device is removed); (d) using a removable storage device to introduce codes without which some disc functions can not work; (e) conversely, with the code from a storage device, some functions are enabled (and disabled with the storage device is removed); (f) using a removable storage device inserted in a disc player to introduce some codes without which some network-connected transactions can not work; (g) conversely, with the code from the storage device, some functions are enabled but disabled if the storage device is removed; (h) using two external devices in two disc players to allow the two players to exchange data over a network.

While the invention has been described with reference to several particular embodiments, it is to be understood that these embodiments are merely illustrative of the principles of the invention. Accordingly, the embodiments described in particular should be considered exemplary, not limiting, with respect to the following claims.

Numerous modifications and alternations may be made to this invention without departing from its scope as defined in the appended claims.

**Claims**

1. An apparatus generating a stereoscopic video signal comprising:

   a read member receiving an optical disc and reading standard video data that is playable to generate 2D images from said optical disc;
   an input device receiving enhancement data;
   a combiner coupled to said read member and said input device and combining said standard video data and said enhancement data to generate said stereoscopic video signal; and
   a network interface exchanging information with a remote server, wherein said input device is coupled to said network interface to receive said enhancement data.

2. The apparatus of claim 1 wherein said input device receives a data file with said enhancement data.

3. The apparatus of claim 1 wherein said input device receives a data stream, said enhancement data being part of said data stream.

4. A method of generating a stereoscopic video signal by a DVD player from an optical disc, wherein said player includes a network interface for providing information exchange between said player and a remote server, said method comprising:

   retrieving from said optical disc standard video data that is playable to generate 2D images;
   retrieving enhancement data by said network interface;
   receiving said enhancement data by said player; and
   combining the standard video data with said enhancement data to generate said stereoscopic video signal.

5. The method of claim 4 wherein said enhancement data is presented as a data file.

6. The method of claim 4 wherein said enhancement data is streamed data.

7. The method of claim 4 wherein said enhancement data is a difference signal for converting the standard video data into the stereoscopic video signal.

**Patentansprüche**

1. Vorrichtung, die ein stereoskopisches Videosignal erzeugt, umfassend:

   ein Leseelement, das eine optische Disk empfängt und Standardvideodaten, die abspielbar sind, um 2D-Bilder zu erzeugen, von der optischen Disk liest;
   ein Eingabegerät, das Verbesserungsdaten empfängt;
   einen Kombinierer, der mit dem Leseelement und dem Eingabegerät gekoppelt ist und die Standardvideodaten und die Verbesserungsdaten kombiniert, um das stereoskopische Videosignal zu erzeugen; und
   eine Netzwerkschnittstelle, die Informationen mit einem Remote-Server austauscht, wobei das Eingabegerät mit der Netzwerkschnittstelle gekoppelt ist, um die Verbesserungsdaten zu empfangen.

2. Vorrichtung nach Anspruch 1, wobei das Eingabegerät ein Datenfile mit den Verbesserungsdaten empfängt.

3. Vorrichtung nach Anspruch 1, wobei das Eingabegerät einen Datenstream empfängt, wobei die Verbesserungsdaten Teil des Datenstreams sind.

4. Verfahren zum Erzeugen eines stereoskopischen Videosignals durch einen DVD-Spieler von einer optischen Disk, wobei der Spieler eine Netzwerkschnittstelle zum Bereitstellen eines Informationsaustauschs zwischen dem Spieler und einem Remote-Server beinhaltet, wobei das Verfahren umfasst:

   Abrufen von Standardvideodaten, die abspielbar sind, um 2D-Bilder zu erzeugen, von der optischen Disk;
   Abrufen von Verbesserungsdaten durch die Netzwerkschnittstelle;
   Empfangen der Verbesserungsdaten durch den Spieler; und
   Kombinieren der Standardvideodaten mit den Verbesserungsdaten, um das stereoskopische Videosignal zu erzeugen.

5. Verfahren nach Anspruch 4, wobei die Verbesserungsdaten als ein Datenfile präsentiert sind.

6. Verfahren nach Anspruch 4, wobei die Verbesserungsdaten gestreamte Daten sind.

7. Verfahren nach Anspruch 4, wobei die Verbesserungsdaten ein Differenzsignal zum Konvertieren der Standardvideodaten in das stereoskopische Videosignal sind.

**Revendications**

1. Dispositif produisant un signal vidéo stéréoscopique, comprenant :

   un élément de lecture recevant un disque optique et lisant une donnée vidéo normalisée, qui peut être passée pour produire des images en 2D à partir du disque optique ;
   un dispositif d'entrée recevant une donnée d'amélioration ;
   un combineur couplé à l'élément de lecture et au dispositif d'entrée et combinant la donnée vidéo normalisée et la donnée d'amélioration pour produire le signal vidéo stéréoscopique ; et
   une interface de réseau échangeant de l'information avec un serveur à distance, le dispositif d'entrée étant couplé à l'interface de réseau pour recevoir la donnée d'amélioration.

2. Dispositif suivant la revendication 1, dans lequel le dispositif d'entrée reçoit un fichier de données ayant la donnée d'amélioration.

3. Dispositif suivant la revendication 1, dans lequel le dispositif d'entrée reçoit un flux de données, la donnée d'amélioration faisant partie du flux de données.

4. Procédé de production d'un signal vidéo stéréoscopique par un écouteur de DVD à partir d'un disque optique, l'écouteur comprenant une interface de réseau pour fournir un échange d'informations entre l'écouteur et un serveur à distance, procédé dans lequel :

   on recherche dans le disque optique une donnée vidéo normalisée, qui peut être passée pour produire des images en 2 D ;
   on recherche une donnée d'amélioration par l'interface de réseau ;
   on reçoit la donnée d'amélioration par l'écouteur ; et
   on combine la donnée vidéo normalisée à la donnée d'amélioration pour produire le signal vidéo stéréoscopique.

**5.** Procédé suivant la revendication 4, dans lequel on présente la donnée d'amélioration sous la forme d'un fichier de données.

**6.** Procédé suivant la revendication 4, dans lequel la données d'amélioration est une donnée transmise en continu.

**7.** Procédé suivant la revendication 4, dans lequel la donnée d'amélioration est un signal de différence pour transformer la donnée vidéo normalisée en le signal vidéo stéréoscopique.

FIG. 1

FIG. 2

EP 2 158 769 B1

FIG. 3

EP 2 158 769 B1

FIG. 4

FIG. 5

| D'xy | 2 (D'xy-128) | D'xy | 2 (D'xy-128) | D'xy | 2 (D'xy-128) | D'xy | 2 (D'xy-128) |
|---|---|---|---|---|---|---|---|
| 0 | -255 | 65 | -126 | 129 | 2 | 193 | 130 |
| 1 | -254 | 66 | -124 | 130 | 4 | 194 | 132 |
| 2 | -252 | 67 | -122 | 131 | 6 | 195 | 134 |
| 3 | -250 | 68 | 120 | 132 | 8 | 196 | 136 |
| 4 | -248 | 69 | -118 | 133 | 10 | 197 | 138 |
| 5 | -246 | 70 | -116 | 134 | 12 | 198 | 140 |
| 6 | -244 | 71 | -114 | 135 | 14 | 199 | 142 |
| 7 | -242 | 72 | -112 | 136 | 16 | 200 | 144 |
| 8 | -240 | 73 | -110 | 137 | 18 | 201 | 146 |
| 9 | -238 | 74 | -108 | 138 | 20 | 202 | 148 |
| 10 | -236 | 75 | -106 | 139 | 22 | 203 | 150 |
| 11 | -234 | 76 | -104 | 140 | 24 | 204 | 152 |
| 12 | -232 | 77 | -102 | 141 | 26 | 205 | 154 |
| 13 | -230 | 78 | -100 | 142 | 28 | 206 | 156 |
| 14 | -228 | 79 | -98 | 143 | 30 | 207 | 158 |
| 15 | -226 | 80 | -96 | 144 | 32 | 208 | 160 |
| 16 | -224 | 81 | -94 | 145 | 34 | 209 | 162 |
| 17 | -222 | 82 | -92 | 146 | 36 | 210 | 164 |
| 18 | -220 | 83 | -90 | 147 | 38 | 211 | 166 |
| 19 | -218 | 84 | -88 | 148 | 40 | 212 | 168 |
| 20 | -216 | 85 | -86 | 149 | 42 | 213 | 170 |
| 21 | -214 | 86 | -84 | 150 | 44 | 214 | 172 |
| 22 | -212 | 87 | -82 | 151 | 46 | 215 | 174 |
| 23 | -210 | 88 | -80 | 152 | 48 | 216 | 176 |
| 24 | -208 | 89 | -78 | 153 | 50 | 217 | 178 |
| 25 | -206 | 90 | -76 | 154 | 52 | 218 | 180 |
| 26 | -204 | 91 | -74 | 155 | 54 | 219 | 182 |
| 27 | -202 | 92 | -72 | 156 | 56 | 220 | 184 |
| 28 | -200 | 93 | -70 | 157 | 58 | 221 | 186 |
| 29 | -198 | 94 | -68 | 158 | 60 | 222 | 188 |
| 30 | -196 | 95 | -66 | 159 | 62 | 223 | 190 |
| 31 | -194 | 96 | -64 | 160 | 64 | 224 | 192 |
| 32 | -192 | 97 | -62 | 161 | 66 | 225 | 194 |
| 33 | -190 | 98 | -60 | 162 | 68 | 226 | 196 |
| 34 | -188 | 99 | -58 | 163 | 70 | 227 | 198 |
| 35 | -186 | 100 | -56 | 164 | 72 | 228 | 200 |
| 36 | -184 | 101 | -54 | 165 | 74 | 229 | 202 |
| 37 | -182 | 102 | -52 | 166 | 76 | 230 | 204 |
| 38 | -180 | 103 | -50 | 167 | 78 | 231 | 206 |
| 39 | -178 | 104 | -48 | 168 | 80 | 232 | 208 |
| 40 | -176 | 105 | -46 | 169 | 82 | 233 | 210 |

FIG. 6A

| 6A |
|---|
| 6B |

FIG. 6

| D'xy | 2 (D'xy-128) | | D'xy | 2 (D'xy-128) | | D'xy | 2 (D'xy-128) | | D'xy | 2 (D'xy-128) |
|---|---|---|---|---|---|---|---|---|---|---|
| 41 | -174 | | 106 | -44 | | 170 | 84 | | 234 | 212 |
| 42 | -172 | | 107 | -42 | | 171 | 86 | | 235 | 214 |
| 43 | -170 | | 108 | -40 | | 172 | 88 | | 236 | 216 |
| 44 | -168 | | 109 | -38 | | 173 | 90 | | 237 | 218 |
| 45 | -166 | | 110 | -36 | | 174 | 92 | | 238 | 220 |
| 46 | -170 | | 111 | -34 | | 175 | 94 | | 239 | 222 |
| 47 | -168 | | 112 | -32 | | 176 | 96 | | 240 | 224 |
| 48 | -160 | | 113 | -30 | | 177 | 98 | | 241 | 226 |
| 49 | -158 | | 114 | -28 | | 178 | 100 | | 242 | 228 |
| 50 | -156 | | 115 | -26 | | 179 | 102 | | 243 | 230 |
| 51 | -154 | | 116 | -24 | | 180 | 104 | | 244 | 232 |
| 52 | -152 | | 117 | -22 | | 181 | 106 | | 245 | 234 |
| 53 | -150 | | 118 | -20 | | 182 | 108 | | 246 | 236 |
| 54 | -148 | | 119 | -18 | | 183 | 110 | | 247 | 238 |
| 55 | -146 | | 120 | -16 | | 184 | 112 | | 248 | 240 |
| 56 | -144 | | 121 | -14 | | 185 | 114 | | 249 | 242 |
| 57 | -142 | | 122 | -12 | | 186 | 116 | | 250 | 244 |
| 58 | -140 | | 123 | -10 | | 187 | 118 | | 251 | 246 |
| 59 | -138 | | 124 | -8 | | 188 | 120 | | 252 | 248 |
| 60 | -130 | | 125 | -6 | | 189 | 122 | | 253 | 250 |
| 61 | -134 | | 126 | -4 | | 190 | 124 | | 254 | 251 |

FIG. 6B

FIG. 7

INTER/INTRA-
NET
250

DVD
PLAYER
200

DVD
PLAYER
300

218

318

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6633725 B
- US 20040240860 A
- US 20030108341 A1